# EUROPÄISCHE PATENTANMELDUNG

(11) **EP 4 353 515 A1**
(43) Veröffentlichungstag der Anmeldung: **17.04.2024**
(21) Anmeldenummer: 23213856.0
(22) Anmeldetag: 22.06.2018
(51) Int. Cl.: B60L 3/00, B60L 53/30, B60L 53/31, B60L 53/68, B60L 53/65

(54) **SYSTEM MIT ZENTRALEINHEIT UND MEHREREN GLEICHSPANNUNGSLADESÄULEN ZUM LADEN VON ELEKTROFAHRZUEGEN**

(62) Teilanmeldung aus: 18020275.6
(71) Anmelder: eLoaded GmbH, 6020 Innsbruck (AT)
(72) Erfinder: Steinbacher, Frank, 6020 Innsbruck (AT)
(74) Vertreter: Kimpfbeck, Thomas

(57) **Zusammenfassung**

Es wird eine Gleichspannungsladesäule (100; 200; 300) zum Laden eines Elektrofahrzeugs beschrieben. Die Gleichspannungsladesäule (100; 200; 300) umfasst zwei Gleichspannungsladesäulen-Eingangsanschlüsse (102, 104) für eine Eingangsgleichspannung (V_{E}) mit einem ersten Spannungsbereich bereitgestellt von einer Zentraleinheit; einen ersten Gleichspannungswandler (106; 302) zum Wandeln der Eingangsgleichspannung (V_{E}) in eine Ausgangsgleichspannung (V_{A}) mit einem zweiten Spannungsbereich; zwei Gleichspannungsladesäulen-Ausgangsanschlüsse (108, 110) zum Bereitstellen der Ausgangsgleichspannung (V_{A}) an das Elektrofahrzeug; sowie eine Steuereinheit (112) mit einer ersten Kommunikationsschnittstelle (114) zur Kommunikation zwischen der Gleichspannungsladesäule (100; 200; 300) und der Zentraleinheit.

## Beschreibung

### TECHNISCHES GEBIET

Die vorliegende Erfindung betrifft eine Gleichspannungsladesäule zum Laden eines Elektrofahrzeugs.

### STAND DER TECHNIK

Zum Laden von Elektrofahrzeugen mit Strom werden im Allgemeinen Ladevorrichtungen eingesetzt. Im Heimbereich nennt man diese Wallbox, da sie meistens an einer Hauswand befestigt sind. Im öffentlichen Raum werden häufig so genannte Ladesäulen aufgestellt. Wallboxen und Ladesäulen haben meist eine oder mehrere Steckdosen. Die Steckdosen werden auch als Ladepunkte bezeichnet. Ein Ladekabel mit Stecker ist an der Steckdose anschließbar oder bereits angeschlagen und verbindet das Elektrofahrzeug elektrisch mit der Ladevorrichtung.

Es sind verschiedene Steckverbindungstypen bekannt, so z. B.:
- Schuko-Stecker;
- IEC 62196-2 Typ 1, eine Einphasen-Wechselstromverbindung;
- IEC 62196-2 Typ 2, eine Ein- und Dreiphasenwechselstromverbindung und
- IEC 62196-2 Typ 3, eine Ein- und Dreiphasenwechselstromverbindung mit Schutzmechanismen

Typ-2-Steckverbindungen werden überwiegend in Europa eingesetzt und erlauben auch das Laden mit Gleichstrom bei Leistungsabgaben bis 120kW (Typ-2 Tesla - Gleichstromladen über Typ2-Stecker.

Beim Laden mit Wechselstrom ist in den Elektrofahrzeugen meist ein Wandler vorgesehen, der den Wechselstrom in den für das Batterieladen notwendigen Gleichstrom wandelt. Für schnelles Laden mit hoher Leistung wäre jedoch ein nachteilig großer und teurer Wandler in jedem Elektrofahrzeug notwendig. Deshalb setzt die Industrie beim Schnellladen zunehmend auf Gleichspannungs- bzw. Gleichstromladesäulen, auch DC-Säule, DC-Ladesäule oder DC-Schnell-Lader genannt.

Folgende Schnelllade-Steckverbindungen haben sich bisher etabliert:
- CCS, Combined Charching System, zu Deutsch: kombiniertes Ladesystem, ist ein von deutschen Automobilherstellern entwickelter und seit 2014 EU-weit bindender Standard, der das Laden mit Wechselstrom und Gleichstrom beschreibt. Hierbei ist ein elektrofahrzeugseitiger Stecker für das Wechselstromladen mit einem Typ-2-Stecker und für das Gleichstromladen mit zwei zusätzlichen Hochleistungs-Gleichstromlade-Pins ausgestattet.
- Chademo ist ein Standard, der u. a. von japanischen Automobilherstellern entwickelt wurde.
- Tesla Supercharger ist eine proprietäre Technologie von Tesla für das Laden von Tesla-Elektrofahrzeugen.

Aus der deutschen Patentanmeldung DE102015110023 ist ferner eine Ladestation bzw. Zentraleinheit zum Laden eines Plug-In-Kraftfahrzeuges an einer Ladesäule bekannt, wobei diese Ladestation einen Leistungstransformator, mehrere Gleichrichtermodule und einen rückspeisefähigen Pufferspeicher umfasst.

### AUFGABE DER ERFINDUNG

Somit besteht die Aufgabe der vorliegenden Erfindung darin, das Zusammenspiel einer Gleichspannungsladesäule mit einer Zentraleinheit zu verbessern.

### OFFENBARUNG DER ERFINDUNG

Erfindungsgemäß wird eine Gleichspannungsladesäule zum Laden eines Elektrofahrzeugs gemäß Anspruch 1 bereitgestellt.

Die erfindungsgemäße Gleichspannungsladesäule umfasst vorzugsweise zwei Gleichspannungsladesäulen-Eingangsanschlüsse für eine Eingangsgleichspannung mit einem ersten Spannungsbereich, wobei die Eingangsgleichspannung von einer Zentraleinheit bereitgestellt wird. Ferner umfasst die erfindungsgemäße Gleichspannungsladesäule einen ersten Gleichspannungswandler zum Wandeln der Eingangsgleichspannung in eine Ausgangsgleichspannung mit einem zweiten Spannungsbereich, sowie zwei Gleichspannungsladesäulen-Ausgangsanschlüsse zum Bereitstellen der Ausgangsgleichspannung an das Elektrofahrzeug. Die erfindungsgemäße Gleichspannungsladesäule kann ferner eine Steuereinheit mit einer ersten Kommunikationsschnittstelle zur Kommunikation zwischen der Gleichspannungsladesäule und der Zentraleinheit umfassen.

Gleichspannungsladesäulen werden beispielsweise auch als Gleichstromladesäulen, DC-Säule, DC-Ladesäule oder DC-Schnell-Lader bezeichnet.

Der Begriff Elektrofahrzeug soll vorzugsweise folgende Bedeutungen umfassen:
- Reine Elektrofahrzeuge, angetrieben allein mit Akkustrom, englische Bezeichnung Battery Electric Vehicle, auch Batterieelektrische Fahrzeuge genannt;
- Fahrzeuge mit Elektroantrieb und Range-Extender;
- Hybridfahrzeuge, englisch Hybrid Electric Vehicle;
- Plug-In-Hybride, englisch Plug-In Hybrid Electric Vehicle und
- Brennstoffzellenfahrzeuge, englisch Fuel Cell Vehicle.

Laden bezeichnet dabei vorzugsweise einem Akkumulator elektrische Energie zum Aufladen zuzuführen. Akkumulatoren können auch als Akku oder Batterie bezeichnet werden. Ihr Einsatz in einem Elektrofahrzeug wird vorzugsweise als Antriebs- oder Traktionsbatterie umschrieben.

Es ist generell wünschenswert Batterien schnell aufladen zu können. Insbesondere auf langen Fahrten, die die Reichweite einer Elektrofahrzeugbatterie überschreitet, ist ein schnelles Laden von Vorteil. Eine Batterie kann entweder über lange Zeit mit wenig Leistung geladen werden oder mit hoher Leistung in kurzer Zeit; die Ladeenergie ist gleich Leistung mal Ladezeit.

Ein Gleichspannungswandler, auch DC-DC-Wandler genannt, englisch DC-DC Converter, bezeichnet im Allgemeinen eine elektrische Schaltung, die eine am Eingang zugeführte Gleichspannung in eine Gleichspannung mit höherem, niedrigerem oder invertiertem Spannungsniveau umwandelt. Gleichspannungswandler weisen typischerweise zwei Eingangs- und zwei Ausgangsanschlüsse auf.

In einer bevorzugten Ausführungsform überträgt oder empfängt die Steuereinheit über die erste Kommunikationsschnittstelle wenigstens eine der folgenden Informationen:
- Status der Gleichspannungsladesäule und/oder
- Daten über die maximal von der Gleichspannungsladesäule abgegebenen Leistung und/oder
- Ladeenergiewert und/oder
- Ladezeitwert und/oder
- Elektrofahrzeugidentifikationsinformation und/oder
- Softwareupdate-Daten.

Der Status der Gleichspannungssäule umfasst dabei z.B.:
- eine Information darüber, ob ein Elektrofahrzeug zum Laden angeschlossen ist oder nicht und/oder
- eine Information darüber, ob ein Elektrofahrzeug gerade geladen wird und/oder
- eine Information über eine Verschaltung ein oder mehrerer der Gleichspannungswandler.
- die verfügbare Energie, Leistung, Spannung, Betriebszustand und zukünftige Betriebszustände der Zentraleinheit (z.B. Energieverfügbarkeitsprognosen auf Grund der Energielieferverbindungen (Photovoltaik-Strom, Biomassestromproduktion)).

Der Ladeenergiewert umfasst vorzugsweise das Produkt aus Ladezeit und Ladeleistung. Der Ladeenergiewert und/oder der Ladezeitwert können als Grundlage zur Berechnung des Verkaufspreises für die Batterieladung und/oder als Kundeninformation dienen.

Anhand der Elektrofahrzeugidentifikationsinformation kann die Zentraleinheit oder die Gleichspannungsladesäule ermitteln, welche maximale Ladeleistung für das jeweils angeschlossene Elektrofahrzeug zulässig ist und eine entsprechende maximale Leistung abgeben und diese der Gleichspannungsladesäule zur Verfügung stellen.

Eine Zentraleinheit kann ein oder mehrere Gleichspannungsladesäulen umfassen und steuern.

Die erfindungsgemäße Gleichspannungsladesäule kann ferner die Energieeffizienz verbessern.

Gemäß einer weiteren bevorzugten Ausführungsform kann die Steuereinheit an der ersten Kommunikationsschnittstelle einen seriellen Kommunikationsstandard, insbesondere Ethernet, unterstützen. Leitungsgebundene Kommunikation, wie Ethernet, kann gegenüber drahtloser Kommunikation zwischen Zentraleinheit und Gleichspannungsladesäule von Vorteil sein, um z.B. den Einfluss von in der Gleichspannungsladesäule oder der Umgebung erzeugter Hochfrequenz-Störung zu verringern. Ethernet-Kabel, Router und Netzwerkkarten sind im Allgemeinen preiswert und erlauben hohe Datenraten; häufig sind PCs und Industrierechner bereits serienmäßig mit einer Ethernet-Schnittstelle ausgestattet und können für die Steuereinheit bzw. die Zentraleinheit eingesetzt werden. Für Ethernet-Kupferkabel sind vorteilhafte Linklängen von bis zu ca. 100 m möglich, mit Ethernet-Glasfaserkabeln üblicherweise noch weit mehr.

In einer weiteren vorteilhaften Weiterbildung der Erfindung umfasst die Steuereinheit eine zweite Kommunikationsschnittstelle zur Kommunikation zwischen der Gleichspannungsladesäule und dem Elektrofahrzeug.

Über die zweite Kommunikationsschnittstelle können insbesondere die Steuereinheit und ein Batteriemanagementsystem des Elektrofahrzeugs anhand eines Kommunikationsprotokolls miteinander kommunizieren.

Das Batteriemanagementsystem kann z.B.:
- den aktuellen Ladezustand der Elektrofahrzeugbatterie und/oder
- die Gleichspannung und maximale Ladestromstärke bzw. maximale Ladeleistung und/oder
- Momentanspannung der Batterie und/oder
- Batterietemperatur
an die Steuereinheit übermitteln.

Über die erste Kommunikationsschnittstelle kann die Steuereinheit Softwareupdate-Daten empfangen, um ein Kommunikationsprotokoll für die zweite Kommunikationsschnittstelle zu aktualisieren. So kann die Gleichspannungsladesäule z. B. auch stets mit neuesten Elektrofahrzeugen während der Ladung kommunizieren.

Gemäß einer Weiterbildung kann die Steuereinheit an der zweiten Kommunikationsschnittstelle wenigstens zwei verschiedene Kommunikationsprotokolle unterstützen, z.B. Chademo und/oder CCS und/oder Tesla Supercharger. An einer derartigen Gleichspannungsladesäule können so Elektrofahrzeuge mit verschiedenen Steckverbindungen an einem Ladepunkt geladen werden.

Eine weitere bevorzugte Ausführungsform kann darin bestehen, dass die Gleichspannungsladesäule mit einem zweiten Gleichspannungswandler ausgestattet ist, der wahlweise zum ersten Gleichspannungswandler parallel oder in Reihe geschaltet ist.

Eine Reihenschaltung der Gleichspannungswandler kann eine Addition der Ausgangsgleichspannungen der Gleichspannungswandler erzielen. Eine Parallelschaltung der Gleichspannungswandler kann eine Erhöhung eines Ausgangsgleichstromes der Gleichspannungswandler erzielen. Eine Ausgangsgleichstrom-Erhöhung bei gleicher Ausgangsgleichspannung bewirkt eine Erhöhung der Ausgangsleistung der Gleichspannungswandler. So kann die Gleichspannungsladesäule verschiedene Ladespannungen und Ladeleistungen bereitstellen. Beispielsweise wird beim Laden einer Lithiumionenbatterie am Anfang mit maximaler Ladeleistung geladen und die Ladeleistung im weiteren Verlauf verringert. Die Gleichspannungsladesäule kann mehrere Ladepunkte umfassen. Je nach Verlauf kann die Steuereinheit Gleichspannungswandler von einem auf einen anderen Ladepunkt schalten. Die Gleichspannungsladesäule kann einen dritten, vierten und ggf. weitere Gleichspannungswandler umfassen. Die Reihen- bzw. Parallelschaltung aller Gleichspannungswandler erzielt im Wesentlichen die vorgenannten Wirkungen. Die erfindungsgemäße Gleichspannungsladesäule kann damit modular und somit einfach erweiterungsfähig ausgelegt werden. Dies ist zum Beispiel für die Errichtung in vorhandener öffentlicher sowie privater baulicher Infrastruktur von Vorteil.

Gemäß einer weiteren bevorzugten Ausführungsform umfasst die Gleichspannungsladesäule eine Schaltmatrix, die mit der Steuereinheit, mit wenigstens einem Eingangsanschluss jedes oder zumindest mehrerer Gleichspannungswandler und mit den Gleichspannungsladesäulen-Eingangsanschlüssen verbunden ist. Die Steuereinheit kann die Schaltmatrix derart ansteuern, dass alle Gleichspannungswandler entweder parallel oder in Reihe geschaltet sind.

Vorzugsweise umfasst die Gleichspannungsladesäule eine Isolationsmesseinheit, die mit den Gleichspannungsladesäulen-Eingangsanschlüssen und mit Erde bzw. Masse verbunden ist, wobei die Isolationsmesseinheit die Isolation der Gleichspannungsladesäule zu Erde misst und in Abhängigkeit der Messung die Gleichspannungsladesäule vom Elektrofahrzeug elektrisch trennt. Die Isolationsmesseinheit kann zur Beurteilung von Funktionsfähigkeit und Sicherheit der Gleichspannungsladesäule dienen und kann ferner frühzeitig Mängel aufzeigen.

Die Zentraleinheit kann eine zentrale Gleichspannungsquelle, einen Transformator und/oder einen Pufferspeicher umfassen oder einer Direkteinspeisung aus Photovoltaik-Erzeugung, die die Eingangsgleichspannung erzeugen und ein oder mehrere Gleichspannungsladesäulen zur Verfügung stellt. Die Isolationsmesseinheit kann vorteilhaft in jeder einzelnen Gleichspannungsladesäule angeordnet werden und nur die lokale Isolation in der jeweiligen Gleichspannungsladesäule ermitteln und diese ggf. vom Elektrofahrzeug trennen.

Ferner kann die Gleichspannungsladesäule nach einem der vorhergehenden Ansprüche mit einer Leistungsmesseinheit ausgestattet sein, die mit den Gleichspannungsladesäulen-Eingangsanschlüssen verbunden ist und die die an das Elektrofahrzeug abgegebene Leistung und/oder die Ladezeit ermittelt. Der Ladeenergiewert umfasst vorzugsweise das Produkt aus Ladezeit, bzw. Ladezeitwert, und Ladeleistung. Der Ladeenergiewert und/oder der Ladezeitwert können als Grundlage zur Berechnung eines Verkaufspreises für die Batterieladung und/oder als Kundeninformation dienen.

Darüber hinaus kann die Gleichspannungsladesäule eine Temperaturmesseinheit umfassen, die ausgelegt ist die Leistungsabgabe der Gleichspannungsladesäule in Abhängigkeit der gemessenen Temperatur zu steuern. Gleichspannungsladesäulen sollen vorzugsweise in einem Umgebungstemperaturbereich von -20°C bis 45°C volle Leistung abgeben können. Nach dem ersten Jouleschen Gesetz erzeugen stromführende Bauelemente der Gleichspannungsladesäule im Allgemeinen eine bestimmte Wärmeenergie. Ermittelt die Temperaturmesseinheit eine Umgebungstemperatur oder Gleichspannungsladesäulentemperatur über einem vorbestimmten Grenzwert, so kann die Temperaturmesseinheit mittels der Steuereinheit die Leistungsabgabe der Gleichspannungsladesäule und damit der stromführenden Bauelemente reduzieren, um etwa ein Überhitzen, Schmelzen oder in Brand geraten der Bauelemente zu vermeiden.

Gemäß einer Weiterbildung umfasst die Gleichspannungsladesäule einen Hauptschalter, der in Reihe zwischen dem ersten Gleichspannungswandler und einem der Gleichspannungsladesäulen-Eingangsanschlüsse geschaltet ist, wobei der Hauptschalter ausgelegt ist den ersten Gleichspannungswandler wahlweise mit einem der Gleichspannungsladesäulen-Eingangsanschlüsse zu verbinden oder davon zu trennen. Der wenigstens eine Hauptschalter kann dabei in Abhängigkeit eines Notaus-Signals, eines Systemfehlersignals oder der Isolation der Gleichspannungsladesäule zu Erde gesteuert sein. Die Gleichspannungsladesäule kann einen Notaus-Schalter umfassen, den ein Gleichstromladesäulennutzer bedient und der ein Notaus-Signal erzeugt. Die Steuereinheit und/oder die Zentraleinheit können das Systemfehlersignal im Falle einer Fehlfunktion erzeugen. Die Isolationsmesseinheit kann den Hauptschalter in Abhängigkeit der gemessenen Isolation steuern. Ferner kann je Gleichspannungsladesäulen-Eingangsanschluss ein Hauptschalter vorgesehen sein.

Der Begriff "verbunden" umfasst vorzugsweise die Bedeutung "elektrisch verbunden", "elektrisch leitend verbunden" und "gekoppelt".

### KURZBESCHREIBUNG DER ZEICHNUNGEN

Ausführungsbeispiele der Erfindung werden anhand der Zeichnungen und der nachfolgenden Beschreibung erläutert. Es zeigen:
- Fig. 1: eine Gleichspannungsladesäule gemäß der Erfindung,
- Fig. 2: eine weitere Gleichspannungsladesäule gemäß der Erfindung und
- Fig. 3: eine weitere Gleichspannungsladesäule gemäß der Erfindung.

### AUSFÜHRUNGSFORM DER ERFINDUNG

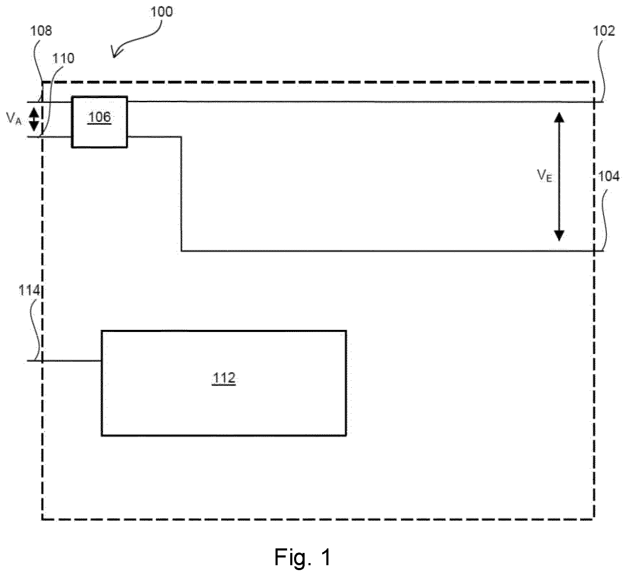

Fig. 1 zeigt eine Gleichspannungsladesäule 100 zum Laden einer Batterie eines Elektrofahrzeugs. Die Gleichspannungsladesäule 100 umfasst zwei

Gleichspannungsladesäulen-Eingangsanschlüsse 102, 104 für eine Eingangsgleich-spannung V_{E} mit einem ersten Spannungsbereich von 0V bis 200V oder von 0V bis 920 V, wobei am Gleichspannungsladesäulen-Eingangsanschluss 104 Massepotential 0V anliegt. Die Eingangsgleichspannung wird von einer Zentraleinheit bereitgestellt und kann sowohl +1000V gegen Erde oder +-500 V gegen Erde im Rahmen einer DC-Bus Versorgung aufgebaut sein.

Ferner zeigt Fig. 1 einen Gleichspannungswandler 106, der einen ersten Gleichspannungswandler bildet, zum Wandeln der Eingangsgleichspannung V_{E} in eine Ausgangsgleichspannung V_{A} mit einem zweiten Spannungsbereich von 1000 V. Der Gleichspannungswandler 106 weist außerdem zwei Gleichspannungsladesäulen-Ausgangsanschlüsse 108, 110 zum Bereitstellen der Ausgangsgleichspannung V_{A} an das Elektrofahrzeug auf, wobei am Gleichspannungsladesäulen-Ausgangsanschluss 108 ein Potential von 500V und am Gleichspannungsladesäulen-Ausgangsanschluss 110 ein Potential von -500V anliegt.

Die Gleichspannungsladesäule 106 weist ferner eine Steuereinheit 112 mit einer Ethernet-Schnittstelle 114 zur Kommunikation zwischen der Gleichspannungsladesäule 106 und der Zentraleinheit auf.

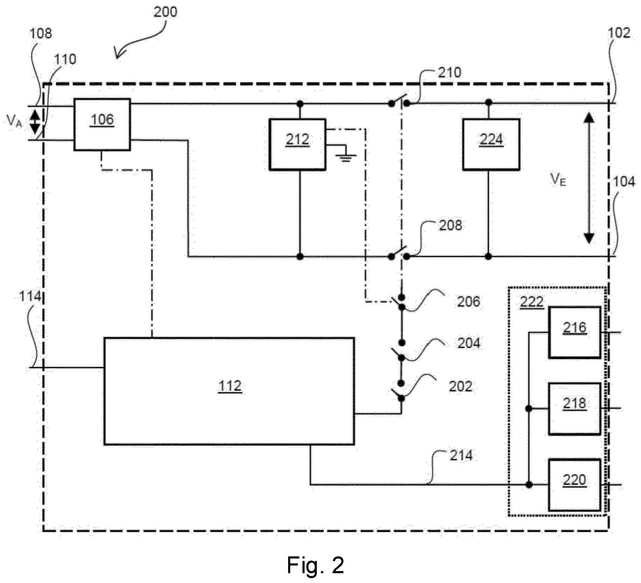

Fig. 2 zeigt eine Gleichspannungsladesäule 200, die die Bauelementen 102 bis 114 der Gleichspannungsladesäule 100 umfasst sowie einen Systemfehlerschalter 202, einen Notaus-Schalter 204, einen Isolationsschalter 206 und zwei Hauptschalter 208, 210. Die Schalter 202 bis 206 sind mit der Steuereinheit 112 verbunden. Die Hauptschalter 208, 210 sind jeweils in Reihe zwischen den Gleichspannungsladesäulen-Eingangsanschlüssen 102, 104 und dem Gleichspannungswandler 106 geschaltet. Wird einer der Schalter 202 bis 206 betätigt so erzeugen diese ein Signal, das die Hauptschalter 208, 210 derart betätigt, dass der Gleichspannungswandler 106 elektrisch von den Gleichspannungsladesäulen-Eingangsanschlüssen 102, 104 getrennt bzw. isoliert wird. Die Gleichspannungsladesäule 200 umfasst eine Isoliermesseinheit 212, die die Isolation der Gleichspannungsladesäule 200 zu Erde misst. Überschreitet die gemessene Isolation einen vorbestimmten Schwellwert, so betätigt die Isolationsmesseinheit 212 direkt, d.h. ohne Mitwirkung der Steuereinheit, den Isolationsschalter 206, der wiederum ein Isolationssignal erzeugt, das die Hauptschalter 208, 210 derart betätigt, dass der Gleichspannungswandler 106 elektrisch von den Gleichspannungsladesäulen-Eingangsanschlüssen 102, 104 getrennt, bzw. isoliert wird.

Der Notaus-Schalter 204 kann von einem Gleichstromladesäulennutzer in einem Notfall betätigt werden. Der Notaus-Schalter 204 erzeugt ein Notaus-Signal, das die Hauptschalter 208, 210 derart betätigt, dass der Gleichspannungswandler 106 elektrisch von den Gleichspannungsladesäulen-Eingangsanschlüssen 102, 104 getrennt, bzw. isoliert wird.

Der Systemfehlerschalter 202 kann von der Steuereinheit 112 betätigt werden und ein Systemfehlersignal erzeugen, das die Hauptschalter 208, 210 derart betätigt, dass der Gleichspannungswandler 106 elektrisch von den Gleich-spannungsladesäulen-Eingangsanschlüssen 102, 104 getrennt, bzw. isoliert wird.

Die Steuereinheit 112 von Fig. 2 umfasst ferner eine Elektrofahrzeug-Kommunikationsschnittstelle 214, die eine zweite Kommunikationsschnittstelle bildet, zur Kommunikation der Gleichspannungsladesäule 200 mit dem Elektrofahrzeug. Die Elektrofahrzeug-Kommunikationsschnittstelle umfasst drei Protokollschnittstellen für das CCS-Protokoll 216, für das Chademo-Protokoll 218 und für das Tesla-Supercharger-Protokoll 220. Die drei Protokollschnittstellen sind als Computer 222 implementiert. Der Computer 222 und/oder die Steuereinheit 112 umfassen einen Mini-PC oder einen Einplatinenrechner, wie Raspberry Pi, Arduino oder dergleichen.

Die Gleichspannungsladesäule 200 umfasst ferner eine Leistungsmesseinheit 224, die mit den Gleichspannungsladesäulen-Eingangsanschlüssen 102 und 104 verbunden ist und die die an das Elektrofahrzeug abgegebene Leistung und/oder die Ladezeit ermittelt. Der Ladeenergiewert umfasst das Produkt aus Ladezeit bzw. Ladezeitwert und Ladeleistung. Der Ladeenergiewert und/oder der Ladezeitwert dienen als Grundlage zur Berechnung eines Verkaufspreises für eine Batterieladung und/oder als Kundeninformation.

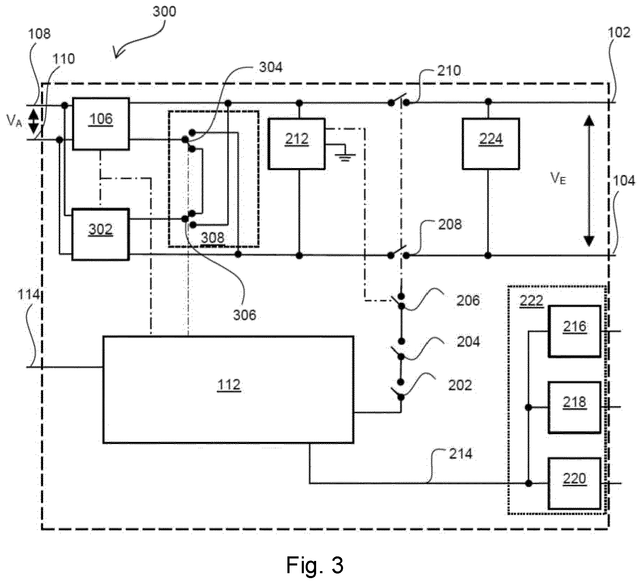

Fig. 3 zeigt eine Gleichspannungsladesäule 300, die die Bauelementen 102 bis 114 der Gleichspannungsladesäule 100, die Bauelement 202 bis 224 der Gleichspannungsladesäule 200 sowie einen zweiten Gleichspannungswandler 302 umfasst. Der zweite Gleichspannungswandler 302 wird wahlweise parallel oder in Reihe geschaltet zum Gleichspannungswandler 106 betrieben.

Die Gleichspannungsladesäule 300 umfasst zwei Schalter 304, 306, die eine Schaltmatrix 308 bilden. Der Schalter 304 ist mit einem ersten Eingangsanschluss des Gleichspannungswandlers 106 verbunden und verbindet den ersten Eingangsanschluss des Gleichspannungswandlers 106 wahlweise mit einem ersten Eingangsanschluss des Gleichspannungswandlers 302 oder mit dem Gleichspannungssäulen-Eingangsanschluss 104.

Der Schalter 306 ist mit dem ersten Eingangsanschluss des Gleichspannungswandlers 302 verbunden und verbindet den ersten Eingangsanschluss des Gleichspannungswandlers 302 wahlweise mit dem ersten Eingangsanschluss des Gleichspannungswandlers 106 oder mit Gleichspannungssäulen-Eingangsanschluss 102.

Die Schalter 304 und 306 werden von der Steuereinheit 112 derart betätigt, dass die Gleichspannungswandler 106, 302 entweder parallel oder in Reihe geschalten sind.

Eine Reihenschaltung der Gleichspannungswandler 106, 302 erzielt eine Addition der Ausgangsgleichspannungen der Gleichspannungswandler 106, 302. Eine Parallelschaltung der Gleichspannungswandler 106, 302 erzielt eine Erhöhung eines Ausgangsgleichstromes der Gleichspannungswandler 106, 302. Eine Ausgangsgleichstrom-Erhöhung bei gleicher Ausgangsgleichspannung V_{A} bewirkt eine Erhöhung der Ausgangsleistung der Gleichspannungswandler 106, 302. So kann die Gleichspannungsladesäule 300 verschiedene Ladespannungen und Ladeleistungen bereitstellen. Beispielsweise wird beim Laden einer Lithiumionenbatterie am Anfang mit maximaler Ladeleistung geladen und die Ladeleistung im weiteren Verlauf verringert.

Alle Schalter 202 bis 210 und 304, 306 können als Relais, Schütz oder Halbleiterschalter, z.B. FET oder Bipolar-Transistor, ausgelegt sein.

## Patentansprüche

1. Gleichspannungsladesäule (100; 200; 300) zum Laden eines Elektrofahrzeugs umfassend:
- zwei Gleichspannungsladesäulen-Eingangsanschlüsse (102, 104) für eine Eingangsgleichspannung (V_{E}) mit einem ersten Spannungsbereich bereitgestellt von einer Zentraleinheit;
- einen ersten Gleichspannungswandler (106; 302) zum Wandeln der Eingangsgleichspannung (V_{E}) in eine Ausgangsgleichspannung (V_{A}) mit einem zweiten Spannungsbereich;
- zwei Gleichspannungsladesäulen-Ausgangsanschlüsse (108, 110) zum Bereitstellen der Ausgangsgleichspannung (V_{A}) an das Elektrofahrzeug;
**dadurch gekennzeichnet, dass**
die Gleichspannungsladesäule (100; 200; 300) eine Steuereinheit (112) mit einer ersten Kommunikationsschnittstelle (114) zur Kommunikation zwischen der Gleichspannungsladesäule (100; 200; 300) und der Zentraleinheit umfasst.

2. Gleichspannungsladesäule (100; 200; 300) nach Anspruch 1, wobei die Steuereinheit (112) über die erste Kommunikationsschnittstelle (114) wenigstens eine der folgenden Informationen überträgt oder empfängt:
- Status der Gleichspannungsladesäule,
- Daten über die maximal von der Gleichspannungsladesäule abgegebenen Leistung,
- Ladeenergiewert,
- Ladezeitwert,
- Elektrofahrzeugidentifikationsinformation,
- Softwareupdate-Daten.

3. Gleichspannungsladesäule (100; 200; 300) nach Anspruch 1 oder 2, wobei die Steuereinheit an der ersten Kommunikationsschnittstelle (114) einen seriellen Kommunikationsstandard, insbesondere Ethernet, unterstützt.

4. Gleichspannungsladesäule (100; 200; 300) nach einem der vorhergehenden Ansprüche, wobei die Steuereinheit (112) eine zweite Kommunikationsschnittstelle (214) zur Kommunikation zwischen der Gleichspannungsladesäule (100; 200; 300) und dem Elektrofahrzeug umfasst.

5. Gleichspannungsladesäule nach Anspruch 4, wobei die Steuereinheit (112) an der zweiten Kommunikationsschnittstelle (214) wenigstens zwei verschiedene Kommunikationsprotokolle (216, 218, 220) an einem Ladepunkt unterstützt.

6. Gleichspannungsladesäule (100; 200; 300) nach einem der vorhergehenden Ansprüche mit einem zweiten Gleichspannungswandler (302), der wahlweise zum ersten Gleichspannungswandler (106) parallel oder in Reihe geschaltet ist.

7. Gleichspannungsladesäule nach Anspruch 5 mit einem dritten und vierten Gleichspannungswandler (106; 302), wobei alle Gleichspannungswandler (106; 302) wahlweise parallel oder in Reihe geschaltet sind.

8. Gleichspannungsladesäule nach Anspruch 6 oder 7, mit einer Schaltmatrix (308), die mit der Steuereinheit (112), mit wenigstens einem Eingangsanschluss jedes Gleichspannungswandlers (106; 302) und mit den Gleichspannungsladesäulen-Eingangsanschlüssen (102, 104) verbunden ist, wobei die Steuereinheit (112) die Schaltmatrix (308) derart ansteuert, dass alle Gleichspannungswandler (106; 302) entweder parallel oder in Reihe geschaltet sind.

9. Gleichspannungsladesäule (100; 200; 300) nach einem der vorhergehenden Ansprüche mit einer Isolationsmesseinheit (212), die mit den Gleichspannungsladesäulen-Eingangsanschlüssen (102, 104) und mit Erde verbunden ist, wobei die Isolationsmesseinheit (212) die Isolation der Gleichspannungsladesäule (100; 200; 300) zu Erde misst und in Abhängigkeit der Messung die Gleichspannungsladesäule (100; 200; 300) vom Elektrofahrzeug elektrisch trennt.

10. Gleichspannungsladesäule (100; 200; 300) nach einem der vorhergehenden Ansprüche mit einer Leistungsmesseinheit (224), die mit den Gleichspannungsladesäulen-Eingangsanschlüssen (102, 104) verbunden ist und die die an das Elektrofahrzeug abgegebene Leistung und/oder die Ladezeit ermittelt.

11. Gleichspannungsladesäule (100; 200; 300) nach einem der vorhergehenden Ansprüche mit einer Temperaturmesseinheit, die ausgelegt ist die Leistungsabgabe der Gleichspannungsladesäule (100; 200; 300) in Abhängigkeit der gemessenen Temperatur zu steuern.

12. Gleichspannungsladesäule (100; 200; 300) nach einem der vorhergehenden Ansprüche mit wenigstens einem Hauptschalter (208, 210), der in Reihe zwischen dem ersten Gleichspannungswandler (106; 302) und einem der Gleichspannungsladesäulen- Eingangsanschlüsse (102, 104) geschaltet ist, wobei der Hauptschalter (208, 210) ausgelegt ist den ersten Gleichspannungswandler (106; 302) wahlweise mit einem der Gleichspannungsladesäulen-Eingangsanschlüsse (102, 104) zu verbinden oder davon zu trennen.

13. Gleichspannungsladesäule (100; 200; 300) nach Anspruch 12, wobei der wenigstens eine Hauptschalter (208, 210) in Abhängigkeit eines Notaus-Signals, eines Systemfehlersignals oder der Isolation der Gleichspannungsladesäule (100; 200; 300) zu Erde gesteuert wird.
